# EUROPÄISCHE PATENTSCHRIFT

(11) **EP 1 662 179 B1**
(45) Veröffentlichungstag und Bekanntmachung des Hinweises auf die Patenterteilung: **13.10.2010**
(21) Anmeldenummer: 05024642.0
(22) Anmeldetag: 11.11.2005
(51) Int. Cl.: F16H 57/12, F16H 3/093, F16H 1/22

(54) **Einrichtung zur Reduzierung der Bewegung der Hauptwelle**
Device to reduce the backlash of the main shaft
Dispositif pour réduire le jeu de l'axe principal

(30) Priorität: 26.11.2004 DE 102004057124
(43) Veröffentlichungstag der Anmeldung: 31.05.2006
(73) Patentinhaber: ZF Friedrichshafen AG, 88038 Friedrichshafen (DE)
(72) Erfinder: Renner, Stefan, 78351 Bodman-Ludwigshafen (DE)

(56) Entgegenhaltungen:
- EP-A- 0 541 023
- DE-A1- 19 633 279
- US-A- 5 020 385

## Beschreibung

Die vorliegende Erfindung betrifft eine Einrichtung zur Reduzierung der Bewegung der Hauptwelle im nicht geschalteten Zustand bei einem Getriebe mit zumindest zwei Vorgelegewellen, gemäß dem Oberbegriff des Patentanspruchs 1.

Bei Getrieben mit zwei Vorgelegewellen ist die Antriebswelle axial und radial fest gelagert; zur Realisierung des Lastausgleichs muss sich die koaxial zur Antriebswelle angeordnete Hauptwelle radial frei bewegen können, wobei im geschalteten Zustand die Hauptwelle über eine eingelegte Muffe auf der Position des sich im Kraftfluss befindlichen Zahnrades zentriert wird.

Üblicherweise liegt die Antriebswelle bei derartigen Getrieben über einen Teil ihrer axialen Ausdehnung sowie mit einem Teil ihrer Axiallagerung innerhalb der Hauptwelle, wobei die Hauptwelle über ein geeignetes Bauteil, vorzugsweise einen Sicherungsring, mit einem Teil der Axiallagerung auf der Antriebswelle verbunden ist, derart, dass eine Übertragung axialer Kräfte von der Hauptwelle auf die Antriebswelle und umgekehrt ermöglicht wird.

Aus der DE 196 33 279 A1 ist eine Axiallagerung für Fahrzeuggetriebe mit Schrägverzahnung in einem Getriebe mit Leistungsteilung auf zwei Vorgelegewellen bekannt. Die Antriebswelle und die Hauptwelle sind über eine Axiallagerung miteinander verbunden. Über einen Verband, bestehend aus Rollenlagern, Scheiben, Ring und Sicherungsringen wird eine axiale Kraftübertragung zwischen den beiden Wellen erreicht.

Schließlich ist aus der gattungsgemäßen EP-A-0 541 023 ein Getriebe bekannt, bei dem mit elastischen Mitteln axiales Spiel von Bauteilen mit unterschiedlicher thermischer Ausdehnung kompensiert werden soll. Dabei wird ein Federelement verwendet, welches das mit der Hauptwelle verbundene Teil der Axiallagerung gegen weitere Bauteile oder Axiallager auf der Antriebswelle verspannt bzw. anpresst.

Im nicht geschalteten Zustand oder beim Umschalten von einem Gang in einen anderen Gang, also wenn keine Muffe eingelegt ist, wird die Hauptwelle nicht zentriert und weicht aus, bis sie beispielsweise auf der Antriebswelle aufliegt. Hierbei kann es in nachteiliger Weise unter dem Einfluss von Fliehkräften, Unwucht und Reibung zum Umherschlagen der Welle kommen, wodurch die Zahnräder zu einer Taumelbewegung angeregt werden, die ein unangenehmes Rasselgeräusch erzeugt.

Des weiteren wird beim Schalten eines Ganges die Hauptwelle beispielsweise über eine Schrägklaue auf die Radmitte gezogen und dabei zentriert, was in nachteiliger Weise in einem möglichen Verschleiß der Schrägklaue resultiert.

Der vorliegenden Erfindung liegt die Aufgabe zugrunde, eine Einrichtung zur Reduzierung der Bewegung und zur Zentrierung der Hauptwelle im nicht geschalteten Zustand bei einem Getriebe mit zwei Vorgelegewellen anzugeben, durch die die Nachteile des Standes der Technik weitgehend vermieden werden. Ferner soll die Einrichtung kostengünstig herstellbar und montierbar sein.

Diese Aufgabe wird durch die Merkmale des Patentanspruchs 1 gelöst. Eine erfindungsgemäße Ausgestaltung und Vorteile gehen aus dem Unteranspruch hervor.

Demnach wird vorgeschlagen, die Hauptwelle gegenüber der Antriebswelle vorzuspannen, so dass die Hauptwelle auch im nicht geschalteten Zustand zentriert ist.

Insbesondere wird eine Einrichtung zur Reduzierung der Bewegung der Hauptwelle im nicht geschalteten Zustand bei einem Getriebe mit zumindest zwei Vorgelegewellen vorgeschlagen, bei dem eine axiale Kraftübertragung zwischen der Antriebswelle und der koaxial dazu angeordneten Hauptwelle durch eine Verbindung der Hauptwelle mit einem Teil der Axiallagerung auf der Antriebswelle erfolgt, welche als Einrichtung zum Vorspannen der Hauptwelle gegenüber der Antriebswelle über eine Verspannung des mit der Hauptwelle verbundenen Teils des Axiallagers gegen weitere Bauteile oder Axiallager auf der Antriebswelle ausgebildet ist.

Die Vorspannung wird durch ein Federelement, welches das mit der Hauptwelle verbundene Teil der Axiallagerung der Hauptwelle gegen weitere Bauteile oder Axiallager der Antriebswelle verspannt, realisiert. Das Federetement ist als Tellerfeder ausgebildet.

Da die Axiallagerrollen immer eine Kreisbewegung beschreiten und von dieser nur durch Überwindung der Haftreibung zwischen der Lagerrolle und der Laufbahn abweichen, kann erfindungsgemäß die Hauptwelle durch eine ausreichend große Federkraft zentriert werden. Hierbei soll die Federkraft bzw. die Vorspannung an der Hauptwelle gegenüber der Antriebswelle gerade so groß sein, dass die Fliehkräfte der Hauptwelle gehalten werden, so dass sich für den Lastausgleich keine Nachteile ergeben.

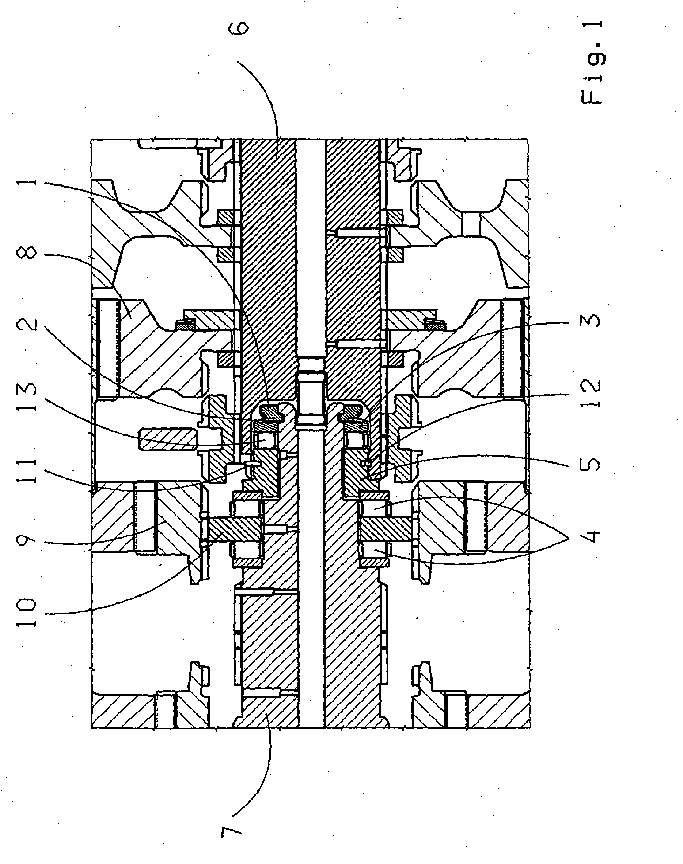

Die Erfindung wird im Folgenden anhand der beigefügten Figur, welche eine schematische Schnittansicht des für die Erfindung relevanten Bereiches eines Getriebes mit zwei Vorgelegewellen darstellt, beispielhaft näher erläutert.

In der beigefügten Figur ist die Antriebswelle des Getriebes mit 7 und die Hauptwelle mit 6 bezeichnet. Ferner ist mit 8 ein auf der Hauptwelle 6 angeordnetes Summenrad und mit 9 die auf der Antriebswelle 7 angeordnete zweite Konstante bezeichnet, die als schrägverzahnte Zahnräder ausgebildet sind. Hierbei wird die zweite Konstante 9 auf der Antriebswelle 7 von einer Scheibe 10 radial getragen, wobei die Scheibe 10 von zwei als Rollenlager ausgebildeten Axiallagern 4 eingefasst ist, so dass sich die Scheibe 10 mit der zweiten Konstante 9 frei drehen kann.

Zur axialen Abstützung der Scheibe 10 in Richtung auf die Hauptwelle 6 ist ein Lagerring 5 vorgesehen, welcher eine Aussparung 11 aufweist, in die ein Sicherungsring 12 eingreift. Ferner wird der Ring 5 axial auf der dem Lager 4 gegenüberliegenden Seite durch ein weiteres als Rollenlager ausgebildetes Axiallager 13 und eine Lagerscheibe 3 gehalten, wobei die Lagerscheibe 3 durch einen Sicherungsring 1 fixiert ist, der als geteilter Ring 1 ausgebildet sein kann.

Der Lagerring 5 liegt über einen Teil seiner axialen Ausdehnung innerhalb der Hauptwelle 6, wobei der Sicherungsring 12 über einen Teil seiner radialen Ausdehnung innerhalb einer Aussparung der Hauptwelle 6 liegt, so dass eine axiale Kraftübertragung zwischen den beiden Wellen 6 und 7 erzielt wird.

Gemäß der Erfindung umfasst die erfindungsgemäße Einrichtung zur Reduzierung der Bewegung der Hauptwelle 6 im nicht geschalteten Zustand eine Einrichtung 2 zum Vorspannen der Hauptwelle 6 gegenüber der Antriebswelle 7 über eine Verspannung des mit der Hauptwelle 6 verbundenen Teils der Axiallagerung 13 gegen weitere Bauteile oder Axiallager 4 auf der Antriebswelle 7.

Die Einrichtung 2 zum Vorspannen der Hauptwelle 6 gegenüber der Antriebswelle 7 ist vorzugsweise als Tellerfeder 2 ausgebildet, welche im gezeigten Ausführungsbeispiel zwischen dem geteilten Ring 1 und der Lagerscheibe 3 angeordnet ist und auf diese Weise das Axiallager 13 und somit den über den Sicherungsring 12 mit der Hauptwelle 6 verbundenen Lagerring 5 gegen das Axiallager 4 auf der Antriebswelle 7 anpresst.

Da, wie bereits erläutert, die Axiallagerrollen zum Beschreiten einer Kreisbewegung ausgelegt sind und von dieser nur durch Überwindung der Haftreibung zwischen den Lagerrollen und der Laufbahn abweichen, kann die Hauptwelle durch eine ausreichend große Federkraft der Tellerfeder zentriert werden. Hierbei ist die Federkraft gerade so groß, dass die Fliehkräfte der Hauptwelle gehalten werden.

Durch die erfindungsgemäße Konzeption wird eine kostengünstige und leicht realisierbare Lösung angeboten, durch die die Reduzierung der Bewegung der Hauptwelle im nicht geschalteten Zustand bei einem Getriebe mit zwei Vorgelegewellen weitgehend vermieden wird. Die erfindungsgemäße Lösung kann auch auf andere ähnliche Systeme übertragen werden.

Selbstverständlich fällt auch jede konstruktive Ausbildung, insbesondere jede räumliche Anordnung des Federelementes soweit technisch sinnvoll, unter den Schutzumfang der vorliegenden Ansprüche, ohne die Funktion der Einrichtung, wie sie in den Ansprüchen angegeben ist, zu beeinflussen, auch wenn diese Ausbildungen nicht explizit in der Figur oder in der Beschreibung dargestellt sind.

### Bezugszeichen

- 1: geteilter Ring, Sicherungsring
- 2: Tellerfeder
- 3: Lagerscheibe
- 4: Axiallager
- 5: Lagerring
- 6: Hauptwelle
- 7: Antriebswelle
- 8: Summenrad
- 9: zweite Konstante
- 10: Scheibe
- 11: Aussparung
- 12: Sicherungsring
- 13: Axiallager

## Patentansprüche

1. Einrichtung zur Reduzierung der Bewegung der Hauptwelle (6) im nicht geschalteten Zustand bei einem Getriebe mit zumindest zwei Vorgelegewellen, wobei eine axiale Kraftübertragung zwischen der Antriebswelle (7) und der koaxial dazu angeordneten Hauptwelle (6) durch eine Verbindung der Hauptwelle (6) mit einem Teil einer Axiallagerung (13) auf der Antriebswelle erfolgt und die Einrichtung als Einrichtung (2) zum Vorspannen der Hauptwelle (6) gegenüber der Antriebswelle (7) über eine Verspannung des mit der Hauptwelle (6) verbundenen Teils der Axiallagerung (13) gegen weitere Bauteile oder Axiallager (4) auf der Antriebswelle (7) ausgebildet ist und die Einrichtung als Federelement (2) ausgebildet ist, welches das mit der Hauptwelle (6) verbundene Teil der Axiallagerung (13) gegen weitere Bauteile oder Axiallager (4) auf der Antriebswelle (7) verspannt bzw. anpresst, **dadurch gekennzeichnet, dass** das Federelement (2) als Tellerfeder (2) ausgebildet ist und die Vorspannung bzw. die Federkraft derart gewählt ist, dass die Fliehkräfte der Hauptwelle (6) gerade gehalten werden, so dass sich für den Lastausgleich keine Nachteile ergeben, so dass die Hauptwelle auch im nicht geschalteten Zustand zentriert ist.

2. Einrichtung zur Reduzierung der Bewegung der Hauptwelle (6) im nicht geschalteten Zustand bei einem Getriebe mit zumindest zwei Vorgelegeweiten nach Anspruch 1, **dadurch gekennzeichnet, dass** für den Fall eines Getriebes, bei dem die eine zweite Konstante (9) radial tragende und von zwei Axiallagern (4) eingefasste Scheibe (10) in Richtung auf die Hauptwelle (6) über einen Lagerring (5) axial abgestützt wird, der über einen Teil seiner axialen Ausdehnung innerhalb der Hauptwelle (6) liegt und mit ihr über ein Element (12) verbunden ist, wobei der Lagerring axial auf der den Lagern (4) gegenüberliegenden und der Hauptwelle zugewandten Seite durch ein Axiallager (13) und durch eine durch einen Sicherungsring (1) fixierte Lagerscheibe (3) gehalten wird, das Federelement (2) zwischen dem Sicherungsring (1) und der Lagerscheibe (3) angeordnet ist, derart, dass das Axiallager (13) und somit der mit der Hauptwelle (6) verbundene Lagerring (5) gegen das Axiallager (4) auf der Antriebswelle (7) angepresst wird.

## Claims

1. Device for reducing the movement of the main shaft (6) in the non-engaged state in a gearbox having at least two countershafts, with an axial transmission of force between the driveshaft (7) and the main shaft (6) arranged coaxially thereto being realized by means of a connection of the main shaft (6) to a part of an axial bearing (13) on the driveshaft, and with the device being designed as a device (2) for preloading the main shaft (6) with respect to the driveshaft (7) by bracing that part of the axial bearing (13) which is connected to the main shaft (6) against further components or axial bearings (4) on the driveshaft (7), and with the device being designed as a spring element (2) which braces or presses that part of the axial bearing (13) which is connected to the main shaft (6) against further components or axial bearings (4) on the driveshaft (7), **characterized in that** the spring element (2) is designed as a plate spring (2) and the preload or the spring force is selected such that the centrifugal forces of the main shaft (6) are just halted, such that no disadvantages arise for the load compensation, such that the main shaft is centred even in the non-engaged state.

2. Device for reducing the movement of the main shaft (6) in the non-engaged state in a gearbox having at least two countershafts according to Claim 1, **characterized in that**, in the case of a gearbox in which the disc (10) which radially supports a second constant (9) and which is bordered by two axial bearings (4) is supported axially in the direction of the main shaft (6) by means of a bearing ring (5) which, over a part of its axial extent, lies within the main shaft (6) and is connected thereto by means of an element (12), with the bearing ring being held axially, on the side situated opposite the bearings (4) and facing towards the main shaft, by an axial bearing (13) and by a bearing disc (3) which is fixed by means of a locking ring (1), the spring element (2) is arranged between the locking ring (1) and the bearing disc (3) in such a way that the axial bearing (13) and therefore the bearing ring (5) which is connected to the main shaft (6) is pressed against the axial bearing (4) on the driveshaft (7).

## Revendications

1. Dispositif pour réduire le mouvement de l'arbre principal (6) dans l'état non commuté dans une transmission comprenant au moins deux arbres secondaires, une transmission de force axiale entre l'arbre d'entraînement (7) et l'arbre principal (6) disposé coaxialement à celui-ci étant réalisée par une connexion de l'arbre principal (6) à une partie d'un support sur palier axial (13) sur l'arbre d'entraînement, et le dispositif étant réalisé sous forme de dispositif (2) pour précontraindre l'arbre principal (6) par rapport à l'arbre d'entraînement (7) par le biais d'un serrage de la partie du support sur palier axial (13) connectée à l'arbre principal (6) contre d'autres composants ou paliers axiaux (4) sur l'arbre d'entraînement (7), et le dispositif étant réalisé sous forme d'élément à ressort (2), qui serre ou presse la partie du support sur palier axial (13) connectée à l'arbre principal (6) contre d'autres composants ou paliers axiaux (4) sur l'arbre d'entraînement (7), **caractérisé en ce que** l'élément à ressort (2) est réalisé sous forme de ressort Belleville (2) et la précontrainte ou la force de ressort est choisie de telle sorte que les forces centrifuges de l'arbre principal (6) soient maintenues droites, de sorte qu'il ne résulte aucun inconvénient pour l'équilibrage des charges, de sorte que l'arbre principal soit centré même dans l'état non commuté.

2. Dispositif pour réduire le mouvement de l'arbre principal (6) dans l'état non commuté dans une transmission comprenant au moins deux arbres secondaires selon la revendication 1, **caractérisé en ce que**, dans le cas d'une transmission dans laquelle le disque (10) portant radialement une deuxième constante (9) et enserré par deux paliers axiaux (4) est supporté axialement dans la direction de l'arbre principal (6) par le biais d'une bague de palier (5), qui se situe sur une partie de son étendue axiale à l'intérieur de l'arbre principal (6), et qui est connectée à celui-ci par le biais d'un élément (12), la bague de palier étant maintenue axialement du côté opposé aux paliers (4) et tourné vers l'arbre principal par un palier axial (13) et par un disque de palier (3) fixé par une bague de fixation (1), l'élément à ressort (2) est disposé entre la bague de fixation (1) et le disque de palier (3) de telle sorte que le palier axial (13) et donc la bague de palier (5) connectée à l'arbre principal (6) soient pressés contre le palier axial (4) sur l'arbre d'entraînement (7).
